(19) Europäisches Patentamt
European Patent Office
Office européen des brevets

(11) **EP 3 280 557 B1**

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(21) Anmeldenummer: **16706366.8**

(22) Anmeldetag: **26.02.2016**

(51) Int Cl.:
**B22D 11/16** $^{(2006.01)}$

(86) Internationale Anmeldenummer:
**PCT/EP2016/054057**

(87) Internationale Veröffentlichungsnummer:
**WO 2016/162141 (13.10.2016 Gazette 2016/41)**

(54) **STRANGGIESSEN MIT OPTIMIERTER OSZILLATION DER STRANGGIESSKOKILLE**

STRAND CASTING HAVING OPTIMIZED OSCILLATION OF THE STRAND CASTING MOLD

COULÉE CONTINUE À OSCILLATION OPTIMISÉE DE LA COQUILLE DE COULÉE CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2015 AT 502732015**

(43) Veröffentlichungstag der Anmeldung:
**14.02.2018 Patentblatt 2018/07**

(73) Patentinhaber: **Primetals Technologies Austria GmbH**
**4031 Linz (AT)**

(72) Erfinder:
• **WAHL, Helmut**
**4222 Luftenberg /Donau (AT)**
• **WIESER, Philipp**
**4521 Schiedlberg (AT)**
• **WIMMER,Peter Paul**
**4020 Leonding (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
• **MÖRWALD K ET AL: "Theoretical studies to adjust proper mold oscillation parameters", PROCEEDINGS, 2000 AISE ANNUAL CONVENTION AND MINI-EXPO, INCLUDES EXHIBITOR LINKS, BOOTH DESCRIPTIONS AND PRODUCTS ON DISPLAY, [SEPTEMBER 10 - 13, CHICAGO'S NAVY PIER], ASSOCIATION OF IRON AND STEEL ENGINEERS, 1. Januar 2000 (2000-01-01), Seite 8pp, XP009189555, in der Anmeldung erwähnt**

EP 3 280 557 B1

**Beschreibung**

Die vorliegende Erfindung geht aus von einem Betriebsverfahren für eine Stranggießanlage,

- wobei flüssiges Metall in eine Stranggießkokille der Stranggießanlage gegossen wird,
- wobei das flüssige Metall an Seitenwänden der Stranggießkokille zu einer Strangschale erstarrt,
- wobei die Strangschale mittels einer Abzugseinrichtung der Stranggießanlage mit oder ohne noch flüssigen Kern in einer Gießrichtung mit einer Gießgeschwindigkeit aus der Stranggießkokille abgezogen wird,
- wobei die Stranggießkokille mittels einer von einer Steuereinrichtung der Stranggießanlage gesteuerten Oszillationseinrichtung der Stranggießanlage in der Gießrichtung periodisch bewegt wird.

Die vorliegende Erfindung geht weiterhin aus von einem Computerprogramm, das Maschinencode umfasst, der von einer Steuereinrichtung einer Stranggießanlage unmittelbar abarbeitbar ist, wobei die Abarbeitung des Maschinencodes durch die Steuereinrichtung bewirkt, dass die Steuereinrichtung eine Oszillationseinrichtung der Stranggießanlage derart ansteuert, dass die Stranggießkokille in der Gießrichtung periodisch bewegt wird.
Die vorliegende Erfindung geht weiterhin aus von einer Steuereinrichtung für eine Stranggießanlage, die mit einem derartigen Computerprogramm programmiert ist.
Die vorliegende Erfindung geht weiterhin aus von einer Stranggießanlage,

- wobei die Stranggießanlage eine Stranggießkokille aufweist, in die flüssiges Metall gegossen wird,
- wobei das flüssige Metall an Seitenwänden der Stranggießkokille zu einer Strangschale erstarrt,
- wobei die Stranggießanlage eine Abzugseinrichtung aufweist, mittels derer die Strangschale mit oder ohne noch flüssigen Kern in einer Gießrichtung mit einer Gießgeschwindigkeit aus der Stranggießkokille abgezogen wird,
- wobei die Stranggießanlage eine Oszillationseinrichtung aufweist, mittels derer die Stranggießkokille in der Gießrichtung periodisch bewegt wird,
- wobei die Stranggießanlage eine Steuereinrichtung aufweist, von der die Oszillationseinrichtung gesteuert wird.

Beim Stranggießen von Metall besteht die Gefahr, dass die frisch erstarrte Strangschale an den Seitenwänden der gekühlten Stranggießkokille anhaftet (anbackt). Um diese Gefahr zu minimieren bzw. zu vermeiden, wird die Stranggießkokille mittels der Oszillationseinrichtung periodisch bewegt. Die Parameter der Oszillationsbewegung wie beispielsweise deren Amplitude, deren Frequenz oder Periode und dergleichen mehr werden von einem übergeordneten System entsprechend der aktuellen Betriebsparameter der Stranggießanlage wie beispielsweise der Gießgeschwindigkeit und der chemischen Zusammensetzung des Metalls (im Falle von Stahl beispielsweise der Stahlsorte) vorgegeben. Eine der Wirkungen der Bewegung der Stranggießkokille besteht darin, dass sich zwischen den Seitenwänden der Stranggießkokille und der erstarrten Strangschale eine Schicht aus Schlacke bildet. Die Schlacke besteht zumindest im Wesentlichen aus Gießpulver. Die Schicht ist in der Regel noch geschmolzen, obwohl der Metallstrang zumindest an seiner Außenseite bereits erstarrt ist. Diese Schicht wirkt schmierend und verhindert insbesondere das Anhaften der Strangschale an den Seitenwänden der Stranggießkokille.
Das Ausbilden der Schicht aus Schlacke erfolgt insbesondere während derjenigen Zeiten, während derer die Abwärtsbewegung der Stranggießkokille schneller ist als die Abwärtsbewegung des Strangs. Das Ausbilden der Schicht aus Schlacke erfolgt also während Zeiten, während derer die Stranggießkokille nach unten bewegt wird und die Geschwindigkeit der Stranggießkokille größer als die Gießgeschwindigkeit ist.
Als einfachste Bewegung für die Stranggießkokille bietet sich eine Sinusschwingung an. Im Stand der Technik sind jedoch auch andere Bewegungen der Stranggießkokille bekannt. Hierzu werden meist, ausgehend von einer sinusförmigen Bewegung, nicht sinusförmige Oszillationskurven verwendet. Unabhängig von der konkreten Art der Bewegung ist das Bestreben jedoch stets, die Schmierwirkung zu optimieren, den Verbrauch an Gießpulver zu minimieren und Oszilliermarken am gegossenen Strang möglichst zu vermeiden.
Beispielsweise ist aus dem Fachvortrag "Theoretical Studies to Adjust Proper Mold Oscillation Parameters" von Karl Moerwald et al., gehalten auf der AISE 2000, Pittsburgh, PA, USA, eine derartige nicht sinusförmige Bewegung bekannt.
Die Aufgabe der vorliegenden Erfindung besteht darin, eine optimierte Bewegungsform für die Stranggießkokille anzugeben.
Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 4.
Erfindungsgemäß wird ein Betriebsverfahren der eingangs genannten Art dadurch ausgestaltet, dass die Bewegung der Stranggießkokille in einem ersten Zeitabschnitt der Periode eine harmonische Schwingung ist, der ein Geschwindigkeitsoffset überlagert ist, und in einem zweiten Zeitabschnitt der Periode mit konstanter Geschwindigkeit erfolgt.

Die harmonische Schwingung weist eine Amplitude auf. Vorzugsweise sind die Amplitude der harmonischen Schwingung, der Geschwindigkeitsoffset und die konstante Geschwindigkeit derart aufeinander abgestimmt, dass der zeitliche Verlauf der Geschwindigkeit beim Übergang vom ersten Zeitabschnitt zum zweiten Zeitabschnitt und beim Übergang vom zweiten Zeitabschnitt einer Periode zum ersten Zeitabschnitt der nachfolgenden Periode stetig differenzierbar ist. Dadurch ergibt sich eine weiche Bewegung der Stranggießkokille, die ruckartige Bewegungen vermeidet. Die mechanische Belastung der Stranggießkokille und der Oszillationseinrichtung sowie der damit verbundenen Maschinenelemente können dadurch minimiert werden. Weiterhin wird eine unkontrollierte Anregung von unerwünschten Schwingungen vermieden.

In einer bevorzugten Ausgestaltung der vorliegenden Erfindung ist vorgesehen,

-  dass der Steuereinrichtung von einer Bedienperson oder einem übergeordneten System drei Größen vorgegeben werden und
-  dass die Steuereinrichtung anhand der ihr vorgegebenen Größen die Periodendauer, den ersten Zeitabschnitt, den zweiten Zeitabschnitt, die Amplitude der harmonischen Schwingung, den Geschwindigkeitsoffset und die konstante Geschwindigkeit ermittelt.

Dadurch ist auf komfortable Weise eine Vorgabe der Parameter der Bewegung der Stranggießkokille möglich.

Beispielsweise ist es möglich,

-  dass eine erste der drei Größen eine der Zeiten Periodendauer, erster Zeitabschnitt und zweiter Zeitabschnitt oder eine hierzu äquivalente Größe ist,
-  dass eine zweite der drei Größen eine der Geschwindigkeiten Amplitude der harmonischen Schwingung, Geschwindigkeitsoffset und konstante Geschwindigkeit oder eine hierzu äquivalente Größe ist und
-  dass eine dritte der drei Größen eine weitere der genannten Zeiten oder eine Beziehung von zwei der Zeiten zueinander oder eine weitere der genannten Geschwindigkeiten oder eine Beziehung von zwei der Geschwindigkeiten zueinander oder eine Zeitspanne oder ein Zeitanteil ist, während dessen die Geschwindigkeit der Oszillation der Stranggießkokille in oder entgegen der Gießrichtung gerichtet ist.

Die Beziehung von zwei der Zeiten zueinander kann beispielsweise das Verhältnis (= der Quotient) oder die Differenz der beiden Zeiten sein. Auch eine andere Beziehung ist möglich. Entscheidend ist, dass anhand der Beziehung und der einen dieser beiden Zeiten die jeweils andere Zeit eindeutig ermittelt werden kann. Analoge Ausführungen gelten, wenn eine Beziehung von zwei der Geschwindigkeiten zueinander vorgegeben wird. Eine zur Periodendauer äquivalente Größe ist beispielsweise die Frequenz. Eine für die Geschwindigkeiten äquivalente Größe ist beispielsweise die maximale Auslenkung der Stranggießkokille aus einer Ruhelage. Die Zeitspanne oder ein Zeitanteil, während dessen die Geschwindigkeit der Oszillation der Stranggießkokille in oder entgegen der Gießrichtung gerichtet ist, ist Fachleuten allgemein als sogenannter nonsinus-Parameter bekannt.

Alternativ ist es möglich,

-  dass der Steuereinrichtung von einer Bedienperson oder einem übergeordneten System maximal zwei der Größen Periodendauer, erster Zeitabschnitt, zweiter Zeitabschnitt, Amplitude der harmonischen Schwingung, Geschwindigkeitsoffset und konstante Geschwindigkeit vorgegeben werden und
-  dass die Steuereinrichtung die Periodendauer, den ersten Zeitabschnitt, den zweiten Zeitabschnitt, die Amplitude der harmonischen Schwingung, den Geschwindigkeitsoffset und die konstante Geschwindigkeit unter Verwendung der Gießgeschwindigkeit und/oder metallurgischer Eigenschaften des flüssigen Metalls selbsttätig ermittelt.

In diesem Fall kann die Steuereinrichtung die Parameter der Bewegung der Stranggießkokille - gegebenenfalls unter Berücksichtigung der vorgegebenen Größen - automatisch optimal wählen. Beispielsweise kann die Steuereinrichtung die Parameter der Bewegung der Stranggießkokille anhand oder unter Verwendung unter anderem der Gießgeschwindigkeit bestimmen.

Die Aufgabe wird weiterhin durch ein Computerprogramm mit den Merkmalen des Anspruchs 6 gelöst. Vorteilhafte Ausgestaltungen des erfindungsgemäßen Computerprogramms sind Gegenstand der abhängigen Ansprüche 7 bis 11.

Erfindungsgemäß bewirkt die Abarbeitung des Maschinencodes durch die Steuereinrichtung zusätzlich, dass die Bewegung der Stranggießkokille in einem ersten Zeitabschnitt der Periode eine harmonische Schwingung ist, der ein Geschwindigkeitsoffset überlagert ist, und in einem zweiten Zeitabschnitt der Periode mit konstanter Geschwindigkeit erfolgt.

Die vorteilhaften Ausgestaltungen des Computerprogramms korrespondieren im wesentlichen mit den vorteilhaften Ausgestaltungen des Betriebsverfahrens.

Die Aufgabe wird weiterhin durch eine Steuereinrichtung für eine Stranggießanlage mit den Merkmalen des Anspruchs 12 gelöst. Erfindungsgemäß ist die Steuereinrichtung mit einem erfindungsgemäßen Computerprogramm programmiert.

Die Aufgabe wird weiterhin durch eine Stranggießanlage mit den Merkmalen des Anspruchs 13 gelöst. Erfindungsgemäß ist eine Stranggießanlage der eingangs genannten Art dadurch ausgestaltet, dass die Steuereinrichtung als erfindungsgemäße Steuereinrichtung ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1          eine Stranggießanlage und
FIG 2 und 3    je ein Zeitdiagramm.

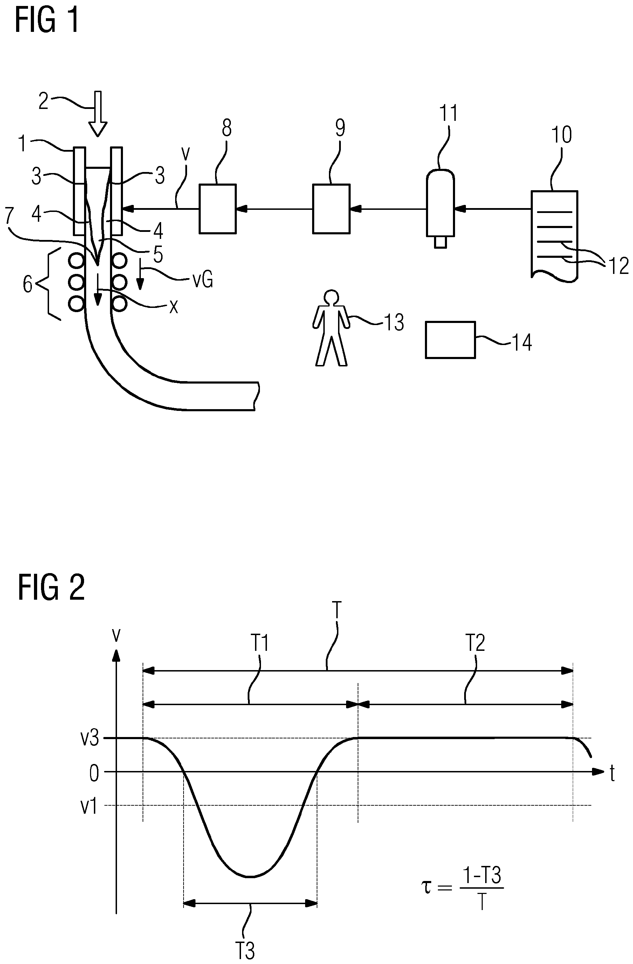

Gemäß FIG 1 weist eine Stranggießanlage eine Stranggießkokille 1 auf. In die Stranggießkokille 1 wird flüssiges Metall 2 gegossen. Das flüssige Metall 2 kann beispielsweise flüssiger Stahl oder flüssiges Aluminium sein.

Die Stranggießkokille 1 weist Seitenwände 3 auf, die mit einem Kühlmedium intensiv gekühlt werden. In der Regel bestehen die Seitenwände 3 aus Kupfer und ist das Kühlmedium Wasser. Das flüssige Metall 2 erstarrt an den Seitenwänden 3 der Stranggießkokille 1 zu einer Strangschale 4. Die Strangschale 4 umgibt einen zunächst noch flüssigen Kern 5, der erst später erstarrt.

Die Stranggießanlage weist weiterhin eine Abzugseinrichtung 6 auf. Mittels der Abzugseinrichtung 6 wird die Strangschale 4 in einer Gießrichtung x mit einer Gießgeschwindigkeit vG aus der Stranggießkokille 1 abgezogen. In der Regel erfolgt das Abziehen der Strangschale 4, während der Kern 5 noch flüssig ist. Eine Sumpfspitze 7 des flüssigen Kerns 5 liegt also im Regelfall außerhalb der Stranggießkokille 1. Dies ist im Rahmen der vorliegenden Erfindung jedoch von untergeordneter Bedeutung. Insbesondere ist die vorliegende Erfindung auch dann anwendbar, wenn das Erstarren des flüssigen Kerns 5 noch in der Stranggießkokille 1 erfolgt, die Sumpfspitze 7 also innerhalb der Stranggießkokille 1 liegt.

Die Stranggießanlage weist weiterhin eine Oszillationseinrichtung 8 auf. Mittels der Oszillationseinrichtung 8 wird die Stranggießkokille 1 periodisch bewegt. Die periodische Bewegung der Stranggießkokille 1 erfolgt in der Gießrichtung x. In der Regel weist die Oszillationseinrichtung 8 einen oder mehrere Hydraulikzylinder auf, mittels derer die Bewegung der Stranggießkokille 1 bewirkt wird. Alternativ kann die Oszillationseinrichtung ein andersartiges Antriebssystem für die Stranggießkokille 1 aufweisen.

In vielen Fällen ist die Stranggießkokille 1 als gerade Kokille ausgebildet. In diesem Fall erfolgt die Oszillation der Stranggießkokille 1 parallel zur Gießrichtung x. Alternativ kann die Stranggießkokille 1 als gebogene Kokille ausgebildet sein. In diesem Fall erfolgt die Oszillation der Stranggießkokille 1 entsprechend der durch die Biegung der Kokille definierten Gießrichtung x.

Die Oszillationseinrichtung 8 wird von einer Steuereinrichtung 9 der Stranggießanlage gesteuert. Oftmals werden von der Steuereinrichtung 9 - zusätzlich zur Ansteuerung der Oszillationseinrichtung 8 - auch andere Komponenten der Stranggießanlage 1 gesteuert, beispielsweise die Abzugseinrichtung 6 oder eine Gießeinrichtung, mittels derer das flüssige Metall 2 in die Stranggießkokille 1 gegossen wird. Die Steuereinrichtung 9 ist in der Regel als softwareprogrammierbare Steuereinrichtung ausgebildet. Ihre Wirkungsweise wird durch ein Computerprogramm 10 festgelegt, mit dem die Steuereinrichtung 9 programmiert ist. Das Computerprogramm 10 kann der Steuereinrichtung 9 beispielsweise über einen Datenträger 11 zugeführt werden, auf dem das Computerprogramm 10 in maschinenlesbarer Form - insbesondere in elektronischer Form - gespeichert ist. Der Datenträger 11 kann beispielsweise entsprechend der Darstellung in FIG 1 als USB-Memorystick ausgebildet sein. Es sind jedoch ebenso beliebige andere Ausgestaltungen des Datenträgers 11 möglich.

Das Computerprogramm 10 umfasst Maschinencode 12, der von der Steuereinrichtung 9 unmittelbar abarbeitbar ist. Die Abarbeitung des Maschinencodes 12 durch die Steuereinrichtung 9 bewirkt, dass die Steuereinrichtung 9 zumindest die Oszillationseinrichtung 8 gemäß einem Betriebsverfahren steuert, das nachstehend näher erläutert wird.

Aufgrund der Steuerung der Oszillationseinrichtung 8 durch die Steuereinrichtung 9 führt die Oszillationseinrichtung 8 eine periodische Bewegung aus. Die periodische Bewegung weist gemäß FIG 2 eine Periodendauer T auf. Die Periodendauer T zerfällt in einen ersten Zeitabschnitt T1 und einen zweiten Zeitabschnitt T2. Die Zeitabschnitte T1 und T2 bilden zusammen die Periodendauer T. Es gilt also die Beziehung

$$T1 + T2 = T \hspace{4cm} (1)$$

Im ersten Zeitabschnitt T1 ist die Bewegung der Stranggießkokille 1, also die durch die Oszillationseinrichtung 8 bewirkte Bewegung, eine harmonische Schwingung, der ein Geschwindigkeitsoffset v1 überlagert ist. Im ersten Zeitabschnitt T1 gilt also als Funktion der Zeit t die Beziehung

$$v(t) = v1 + v2 \cdot \cos(2n\pi t / T1 + \varphi 0) \qquad (2)$$

v2 ist die Amplitude der harmonischen Schwingung. n ist eine natürliche Zahl. Meist weist n entsprechend der Darstellung in FIG 2 den Wert 1 auf. φ0 ist entweder 0 oder n.

Im zweiten Zeitabschnitt T2 erfolgt die Bewegung der Stranggießkokille 1 mit konstanter Geschwindigkeit v3. Im zweiten Zeitabschnitt T2 gilt also als Funktion der Zeit t die Beziehung

$$v(t) = v3 \qquad (3)$$

Nachfolgend wird der Fall behandelt, dass der Phasenversatz φ0 den Wert 0 aufweist. Der Fall, dass der Phasenversatz φ0 den Wert n aufweist, gestaltet sich analog bzw. kann mit einer Vorzeichenumkehr der Amplitude v2 gleichgesetzt werden.

Der Cosinus der harmonischen Schwingung weist sowohl am Anfang als auch am Ende des ersten Zeitabschnitts T1 den Wert +1 auf. An den Grenzen des ersten Zeitabschnitts T1 ergibt sich also für die Überlagerung von harmonischer Schwingung und Geschwindigkeitsoffset v1 der Wert v1 + v2. Da der Übergang zwischen den beiden Zeitabschnitten T1 und T2 stetig sein soll, muss daher gelten

$$v1 + v2 = v3 \qquad (4)$$

Weiterhin gilt für die Beschleunigung a als Funktion der Zeit t im ersten Zeitabschnitt T1 die Beziehung

$$a(t) = -\frac{2n\pi v2}{T1} \sin(2n\pi t / T1 + \varphi 0) \qquad (5)$$

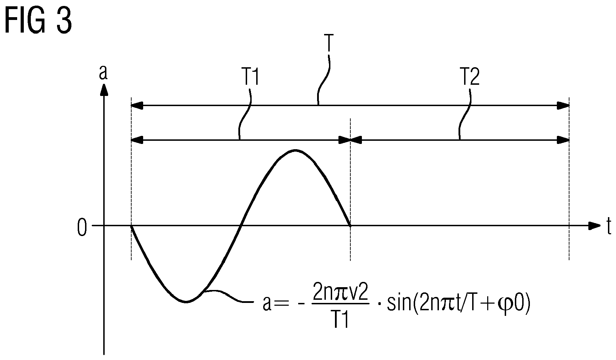

Da die Beschleunigung a - siehe FIG 3 - im zweiten Zeitabschnitt T2 den Wert 0 aufweist, muss die harmonische Schwingung als solche betrachtet eine volle Anzahl von Oszillationen ausführen.

Weiterhin muss für den zurückgelegten Weg über eine volle Periodendauer T gelten, dass er den Wert 0 aufweist. Es muss also gelten:

$$\int_0^T v(t)\,dt = 0 \qquad (6)$$

Durch abschnittweises Integrieren ergibt sich daher, dass die Beziehung

$$v1 \cdot T1 + v1 \cdot T2 + v2 \cdot T2 = 0 \qquad (7)$$

gelten muss. Diese Beziehung kann umgeformt werden zu

$$\frac{v1}{v2} = -\frac{T2}{T} \qquad (8)$$

Wenn diese Bedingungen eingehalten werden, sind die Amplitude v2 der harmonischen Schwingung, der Geschwindigkeitsoffset v1 und die konstante Geschwindigkeit v3 derart aufeinander abgestimmt sind, dass der zeitliche Verlauf der Geschwindigkeit v beim Übergang vom ersten Zeitabschnitt T1 zum zweiten Zeitabschnitt T2 und beim Übergang vom zweiten Zeitabschnitt T2 einer Periode zum ersten Zeitabschnitt T1 der nachfolgenden Periode sowohl als solcher stetig ist als auch stetig differenzierbar ist.

Im Ergebnis weist die Oszillation der Stranggießkokille 1 somit insgesamt sechs Parameter auf, nämlich die drei Zeiten T, T1 und T2 und die drei Geschwindigkeiten v1, v2 und v3. Diese sechs Parameter sind jedoch nicht unabhängig voneinander wählbar. Vielmehr sind sie durch die Gleichungen 1, 4 und 8 miteinander verknüpft.

Wenn von den sechs Parametern eine der Zeiten T, T1 und T2 (oder eine hierzu äquivalente Größe) und eine der Geschwindigkeiten v1, v2 und v3 (oder eine hierzu äquivalente Größe) vorgegeben werden, ist lediglich eine weitere Größe erforderlich, um die verbleibenden vier Parameter eindeutig zu bestimmen. Diese weitere Größe kann beispielsweise eine der beiden verbleibenden Zeiten oder eine der beiden verbleibenden Geschwindigkeiten sein. Auch kann es sich um eine Beziehung von zwei der Zeiten zueinander oder um eine Beziehung von zwei der Geschwindigkeiten zueinander handeln. Alternativ kann es sich bei der weiteren Größe beispielsweise um eine Zeitspanne T3 (absolute Größe) oder einen Zeitanteil $\tau$ (relative Größe) handeln, während dessen die Geschwindigkeit v der Oszillation der Stranggießkokille 1 in oder entgegen der Gießrichtung x gerichtet ist. Insbesondere der Zeitanteil $\tau$ ist Fachleuten allgemein als sogenannter nonsinus-Parameter bekannt.

Es ist daher möglich, dass der Steuereinrichtung 9 von einer Bedienperson 13 oder einem übergeordneten System 14 eine der Zeiten T, T1 und T2 (oder eine hierzu äquivalente Größe) und eine der Geschwindigkeiten v1, v2 und v3 (oder eine hierzu äquivalente Größe) und zusätzlich eine weitere Größe vorgegeben werden. In diesem Fall kann die Steuereinrichtung 9 anhand der ihr vorgegebenen Größen die Periodendauer T, den ersten Zeitabschnitt T1, den zweiten Zeitabschnitt T2, die Amplitude v2 der harmonischen Schwingung, den Geschwindigkeitsoffset v1 und die konstante Geschwindigkeit v3 ermitteln. Es ist lediglich erforderlich, dass die weitere Größe, also die dritte vorgegebene Größe, eine weitere der genannten Zeiten T, T1, T2 oder eine Beziehung von zwei der Zeiten ca. T, T1, T2 oder eine weitere der genannten Geschwindigkeiten v1, v2, v3 oder eine Beziehung von zwei der Geschwindigkeiten v1, v2, v3 zueinander ist. Alternativ kann es sich bei der weiteren Größe beispielsweise um die Zeitspanne T3 oder den Zeitanteil $\tau$ handeln. In der Praxis werden der Steuereinrichtung 9 oftmals die Frequenz (d.h. der Kehrwert der Periodendauer T), die maximale Auslenkung der Oszillation der Stranggießkokille 1 und der Zeitanteil $\tau$ vorgegeben.

Es sind auch andere Vorgehensweisen möglich. Insbesondere ist es alternativ möglich, dass der Steuereinrichtung 9 von der Bedienperson 13 oder dem übergeordneten System 14 maximal zwei der Größen Periodendauer T, erster Zeitabschnitt T1, zweiter Zeitabschnitt T2, Amplitude v2 der harmonischen Schwingung, Geschwindigkeitsoffset v1 und konstante Geschwindigkeit v3 vorgegeben werden. Dies umfasst insbesondere nicht nur den Fall, dass der Steuereinrichtung 9 von der Bedienperson 13 oder dem übergeordneten System 14 exakt zwei der genannten Größen vorgegeben werden. Es umfasst auch die Fälle, dass der Steuereinrichtung 9 von der Bedienperson 13 oder dem übergeordneten System 14 nur eine der genannten Größen oder sogar gar keine der genannten Größen vorgegeben wird. In diesen Fällen ist es jedoch möglich, dass die Steuereinrichtung 9 die Periodendauer T, den ersten Zeitabschnitt T1, den zweiten Zeitabschnitt T2, die Amplitude v2 der harmonischen Schwingung, den Geschwindigkeitsoffset v1 und die konstante Geschwindigkeit v3 unter Verwendung der Gießgeschwindigkeit vG und/oder metallurgischer Eigenschaften des flüssigen Metalls 2 selbsttätig ermittelt. Die der Steuereinrichtung 9 von der Bedienperson 13 oder dem übergeordneten System 14 gegebenenfalls vorgegebenen Größen werden von der Steuereinrichtung 9 bei der Ermittlung berücksichtigt.

Beispielsweise werden in der Praxis die Größen, anhand derer die Zeiten T, T1 und T2 sowie die Geschwindigkeiten v1, v2, v3 ermittelt werden, oftmals anhand der Gießgeschwindigkeit vG ermittelt. Beispielsweise können folgende Beziehungen bestehen:

$$s = c1 + c2 \cdot vG \qquad\qquad (9)$$

$$f = c3 + c4 \cdot vG + c5 \cdot vG / 2s \qquad\qquad (10)$$

$$\tau = c6 \qquad\qquad (11)$$

Die Koeffizienten c1 bis c6 sind in der Regel Konstanten. Alternativ kann es sich um Variable handeln. Weiterhin ist alternativ zu der obenstehend erläuterten Vorgehensweise auch eine anderweitige Ermittlung der Frequenz, der maximalen Auslenkung der Oszillation der Stranggießkokille 1 und des Zeitanteils $\tau$ möglich.

Zusammengefasst betrifft die vorliegende Erfindung somit folgenden Sachverhalt:

Flüssiges Metall 2 wird in eine Stranggießkokille 1 der Stranggießanlage gegossen. Das flüssige Metall 2 erstarrt an Seitenwänden 3 der Stranggießkokille 1 zu einer Strangschale 4. Die Strangschale 4 wird mittels einer Abzugseinrichtung 6 der Stranggießanlage mit oder ohne noch flüssigen Kern 5 in einer Gießrichtung x mit einer Gießgeschwindigkeit vG aus der Stranggießkokille 1 abgezogen. Die Stranggießkokille 1 wird mittels einer Oszillationseinrichtung 8 der Stranggießanlage in der Gießrichtung x periodisch bewegt. Die Oszillationseinrichtung 8 wird von einer Steuereinrichtung 9 der Stranggießanlage gesteuert. Die Bewegung der Stranggießkokille 1 ist in einem ersten Zeitabschnitt T1 der Periode eine harmonische Schwingung, der ein Geschwindigkeitsoffset v1 überlagert ist. In einem zweiten Zeitabschnitt T2 der Periode erfolgt die Bewegung mit konstanter Geschwindigkeit v3.

Die vorliegende Erfindung weist viele Vorteile auf. Insbesondere kann auf einfache Weise die so genannte negative strip time, das heißt diejenige Zeit, während derer die Stranggießkokille 1 sich schneller als die Strangschale 4 nach unten bewegt, optimiert werden. Dennoch können Rucke verhindert und vermieden werden.

Bezugszeichenliste

| 1 | Stranggießkokille |
|---|---|
| 2 | flüssiges Metall |
| 3 | Seitenwände der Stranggießkokille |
| 4 | Strangschale |
| 5 | flüssiger Kern |
| 6 | Abzugseinrichtung |
| 7 | Sumpfspitze |
| 8 | Oszillationseinrichtung |
| 9 | Steuereinrichtung |
| 10 | Computerprogramm |
| 11 | Datenträger |
| 12 | Maschinencode |
| 13 | Bedienperson |
| 14 | übergeordnetes System |

| a | Beschleunigung |
|---|---|
| t | Zeit |
| T | Periodendauer |
| T1, T2 | Zeitabschnitte |
| T3 | Zeitspanne |
| v | Geschwindigkeit der Oszillation |
| v1 | Geschwindigkeitsoffset |
| v2 | Amplitude der harmonischen Schwingung |
| v3 | konstante Geschwindigkeit |
| vG | Gießgeschwindigkeit |
| x | Gießrichtung |

| $\tau$ | Zeitanteil |
|---|---|

**Patentansprüche**

1. Betriebsverfahren für eine Stranggießanlage,

   - wobei flüssiges Metall (2) in eine Stranggießkokille (1) der Stranggießanlage gegossen wird,
   - wobei das flüssige Metall (2) an Seitenwänden (3) der Stranggießkokille (1) zu einer Strangschale (4) erstarrt,
   - wobei die Strangschale (4) mittels einer Abzugseinrichtung (6) der Stranggießanlage mit oder ohne noch flüssigen Kern (5) in einer Gießrichtung (x) mit einer Gießgeschwindigkeit (vG) aus der Stranggießkokille (1) abgezogen wird,
   - wobei die Stranggießkokille (1) mittels einer von einer Steuereinrichtung (9) der Stranggießanlage gesteuerten Oszillationseinrichtung (8) der Stranggießanlage in der Gießrichtung (x) periodisch bewegt wird,

   **dadurch gekennzeichnet,**
   **dass** die Bewegung der Stranggießkokille (1) in einem ersten Zeitabschnitt (T1) der Periode eine harmonische Schwingung ist, der ein Geschwindigkeitsoffset (v1) überlagert ist, und in einem zweiten Zeitabschnitt (T2) der Periode mit konstanter Geschwindigkeit (v3) erfolgt.

**2.** Betriebsverfahren nach Anspruch 1,
**dadurch gekennzeichnet,**
**dass** die harmonische Schwingung eine Amplitude (v2) aufweist und dass die Amplitude (v2) der harmonischen Schwingung, der Geschwindigkeitsoffset (v1) und die konstante Geschwindigkeit (v3) derart aufeinander abgestimmt sind, dass der zeitliche Verlauf der Geschwindigkeit (v) beim Übergang vom ersten Zeitabschnitt (T1) zum zweiten Zeitabschnitt (T2) und beim Übergang vom zweiten Zeitabschnitt (T2) einer Periode zum ersten Zeitabschnitt (T1) der nachfolgenden Periode stetig differenzierbar ist.

**3.** Betriebsverfahren nach Anspruch 2,
**dadurch gekennzeichnet,**

- **dass** der Steuereinrichtung (9) von einer Bedienperson (13) oder einem übergeordneten System (14) drei Größen vorgegeben werden und
- **dass** die Steuereinrichtung (9) anhand der ihr vorgegebenen Größen die Periodendauer (T), den ersten Zeitabschnitt (T1), den zweiten Zeitabschnitt (T2), die Amplitude (v2) der harmonischen Schwingung, den Geschwindigkeitsoffset (v1) und die konstante Geschwindigkeit (v3) ermittelt.

**4.** Betriebsverfahren nach Anspruch 3,
**dadurch gekennzeichnet,**

- **dass** eine erste der drei Größen eine der Zeiten Periodendauer (T), erster Zeitabschnitt (T1) und zweiter Zeitabschnitt (T2) oder eine hierzu äquivalente Größe ist,
- **dass** eine zweite der drei Größen eine der Geschwindigkeiten Amplitude der harmonischen Schwingung (v2), Geschwindigkeitsoffset (v1) und konstante Geschwindigkeit (v3) oder eine hierzu äquivalente Größe ist und
- **dass** eine dritte der drei Größen eine weitere der genannten Zeiten (T, T1, T2) oder eine Beziehung von zwei der Zeiten (T, T1, T2) zueinander oder eine weitere der genannten Geschwindigkeiten (v1, v2, v3) oder eine Beziehung von zwei der Geschwindigkeiten (v1, v2, v3) zueinander oder eine Zeitspanne (T3) oder ein Zeitanteil ($\tau$) ist, während dessen die Geschwindigkeit (v) der Oszillation der Stranggießkokille (1) in oder entgegen der Gießrichtung (x) gerichtet ist.

**5.** Betriebsverfahren nach Anspruch 1 oder 2,
**dadurch gekennzeichnet,**

- **dass** der Steuereinrichtung (9) von einer Bedienperson (13) oder einem übergeordneten System (14) maximal zwei der Größen Periodendauer (T), erster Zeitabschnitt (T1), zweiter Zeitabschnitt (T2), Amplitude (v2) der harmonischen Schwingung, Geschwindigkeitsoffset (v1) und konstante Geschwindigkeit (v3) vorgegeben werden und
- **dass** die Steuereinrichtung (9) die Periodendauer (T), den ersten Zeitabschnitt (T1), den zweiten Zeitabschnitt (T2), die Amplitude (v2) der harmonischen Schwingung, den Geschwindigkeitsoffset (v1) und die konstante Geschwindigkeit (v3) unter Verwendung der Gießgeschwindigkeit (vG) und/oder metallurgischer Eigenschaften des flüssigen Metalls (1) selbsttätig ermittelt.

**6.** Computerprogramm, das Maschinencode (12) umfasst, der von einer Steuereinrichtung (9) einer Stranggießanlage unmittelbar abarbeitbar ist, wobei die Abarbeitung des Maschinencodes (12) durch die Steuereinrichtung (9) bewirkt, dass die Steuereinrichtung (9) eine Oszillationseinrichtung (8) der Stranggießanlage derart ansteuert, dass die Stranggießkokille (1) in der Gießrichtung (x) periodisch bewegt wird und die Bewegung der Stranggießkokille (1) in einem ersten Zeitabschnitt (T1) der Periode eine harmonische Schwingung ist, der ein Geschwindigkeitsoffset (v1) überlagert ist, und in einem zweiten Zeitabschnitt (T2) der Periode mit konstanter Geschwindigkeit (v3) erfolgt.

**7.** Computerprogramm nach Anspruch 6,
**dadurch gekennzeichnet,**
**dass** die Abarbeitung des Maschinencodes (12) durch die Steuereinrichtung (9) bewirkt, dass die harmonische Schwingung eine Amplitude (v2) aufweist und dass die Amplitude (v2) der harmonischen Schwingung, der Geschwindigkeitsoffset (v1) und die konstante Geschwindigkeit (v3) derart aufeinander abgestimmt sind, dass der zeitliche Verlauf der Geschwindigkeit (v) beim Übergang vom ersten Zeitabschnitt (T1) zum zweiten Zeitabschnitt (T2) und beim Übergang vom zweiten Zeitabschnitt (T2) einer Periode zum ersten Zeitabschnitt (T1) der nachfolgenden Periode stetig differenzierbar ist.

8. Computerprogramm nach Anspruch 7,
**dadurch gekennzeichnet,**
**dass** die Abarbeitung des Maschinencodes (12) durch die Steuereinrichtung (9) bewirkt,

- **dass** die Steuereinrichtung (9) von einer Bedienperson (13) oder einem übergeordneten System (14) drei Größen entgegennimmt und
- **dass** die Steuereinrichtung (9) anhand der ihr vorgegebenen Größen die Periodendauer (T), den ersten Zeitabschnitt (T1), den zweiten Zeitabschnitt (T2), die Amplitude (v2) der harmonischen Schwingung, den Geschwindigkeitsoffset (v1) und die konstante Geschwindigkeit (v3) ermittelt.

9. Computerprogramm nach Anspruch 8,
**dadurch gekennzeichnet,**

- **dass** eine erste der drei Größen eine der Zeiten Periodendauer (T), erster Zeitabschnitt (T1) und zweiter Zeitabschnitt (T2) oder eine hierzu äquivalente Größe ist,
- **dass** eine zweite der drei Größen eine der Geschwindigkeiten Amplitude der harmonischen Schwingung (v2), Geschwindigkeitsoffset (v1) und konstante Geschwindigkeit (v3) oder eine hierzu äquivalente Größe ist und
- **dass** eine dritte der drei Größen eine weitere der genannten Zeiten (T, T1, T2) oder eine Beziehung von zwei der Zeiten (T, T1, T2) zueinander oder eine weitere der genannten Geschwindigkeiten (v1, v2, v3) oder eine Beziehung von zwei der Geschwindigkeiten (v1, v2, v3) zueinander oder eine Zeitspanne (T3) oder ein Zeitanteil ($\tau$) ist, während dessen die Geschwindigkeit (v) der Oszillation der Stranggießkokille (1) in oder entgegen der Gießrichtung (x) gerichtet ist.

10. Computerprogramm nach Anspruch 6 oder 7,
**dadurch gekennzeichnet,**
**dass** die Abarbeitung des Maschinencodes (12) durch die Steuereinrichtung (9) bewirkt,

- **dass** die Steuereinrichtung (9) von einer Bedienperson (13) oder einem übergeordneten System (14) maximal zwei der Größen Periodendauer (T), erster Zeitabschnitt (T1), zweiter Zeitabschnitt (T2), Amplitude (v2) der harmonischen Schwingung, Geschwindigkeitsoffset (v1) und konstante Geschwindigkeit (v3) entgegennimmt und
- **dass** die Steuereinrichtung (9) die Periodendauer (T), den ersten Zeitabschnitt (T1), den zweiten Zeitabschnitt (T2), die Amplitude (v2) der harmonischen Schwingung, den Geschwindigkeitsoffset (v1) und die konstante Geschwindigkeit (v3) unter Verwendung der Gießgeschwindigkeit (vG) und/oder metallurgischer Eigenschaften des flüssigen Metalls (2) selbsttätig ermittelt.

11. Computerprogramm nach einem der Ansprüche 6 bis 10,
**dadurch gekennzeichnet,**
**dass** es auf einem Datenträger (11) in maschinenlesbarer Form gespeichert ist.

12. Steuereinrichtung für eine Stranggießanlage,
**dadurch gekennzeichnet,**
**dass** die Steuereinrichtung mit einem Computerprogramm (10) nach einem der Ansprüche 6 bis 10 programmiert ist.

13. Stranggießanlage,

- wobei die Stranggießanlage eine Stranggießkokille (1) aufweist, in die flüssiges Metall (2) gegossen wird,
- wobei das flüssige Metall (2) an Seitenwänden (3) der Stranggießkokille (1) zu einer Strangschale (4) erstarrt,
- wobei die Stranggießanlage eine Abzugseinrichtung (6) aufweist, mittels derer die Strangschale (4) mit oder ohne noch flüssigen Kern (5) in einer Gießrichtung (x) mit einer Gießgeschwindigkeit (vG) aus der Stranggießkokille (1) abgezogen wird,
- wobei die Stranggießanlage eine Oszillationseinrichtung (8) aufweist, mittels derer die Stranggießkokille (1) in der Gießrichtung (x) periodisch bewegt wird,
- wobei die Stranggießanlage eine Steuereinrichtung (9) aufweist, von der die Oszillationseinrichtung (8) gesteuert wird,

**dadurch gekennzeichnet,**
**dass** die Steuereinrichtung (9) als Steuereinrichtung nach Anspruch 12 ausgebildet ist.

**Claims**

1. Operating method for a continuous casting installation,

- liquid metal (2) being poured into a continuous casting mould (1) of the continuous casting installation,
- the liquid metal (2) solidifying on side walls (3) of the continuous casting mould (1) to form a strand shell (4),
- the strand shell (4) being drawn out of the continuous casting mould (1) in a casting direction (x) at a casting velocity (vG) by means of a drawing-off device (6) of the continuous casting installation, with or without a core (5) that is still liquid,
- the continuous casting mould (1) being moved periodically in the casting direction (x) by means of an oscillating device (8) of the continuous casting installation that is controlled by a control device (9) of the continuous casting installation,

**characterized**
**in that**, in a first time segment (T1) of the period, the motion of the continuous casting mould (1) is a harmonic oscillation, on which a velocity offset (v1) is superposed, and, in a second time segment (T2) of the period, the motion occurs with constant velocity (v3).

2. Operating method according to Claim 1,
**characterized**
**in that** the harmonic oscillation has an amplitude (v2) and
**in that** the amplitude (v2) of the harmonic oscillation, the velocity offset (v1) and the constant velocity (v3) are coordinated with one another in such a way that the time progression of the velocity (V) at the transition from the first time segment (T1) to the second time segment (T2) and at the transition from the second time segment (T2) of one period to the first time segment (T1) of the subsequent period is continuously differentiable.

3. Operating method according to Claim 2,
**characterized**

- **in that** three variables are preset for the control device (9) by an operator (13) or a higher-level system (14) and
- **in that** the control device (9) determines on the basis of the variables preset for it the period duration (T), the first time segment (T1), the second time segment (T2), the amplitude (v2) of the harmonic oscillation, the velocity offset (v1) and the constant velocity (v3).

4. Operating method according to Claim 3,
**characterized**

- **in that** a first of the three variables is one of the times, the period duration (T), the first time segment (T1) and the second time segment (T2), or a variable equivalent thereto,
- **in that** a second of the three variables is one of the velocities, the amplitude of the harmonic oscillation (v2), the velocity offset (v1) and the constant velocity (v3), or a variable equivalent thereto and
- **in that** a third of the three variables is another of the said times (T, T1, T2) or a relationship of two of the times (T, T1, T2) to one another or another of the said velocities (v1, v2, v3) or a relationship of two of the velocities (v1, v2, v3) to one another or a time interval (T3) or a time fraction (τ) during which the velocity (v) of the oscillation of the continuous casting mould (1) is directed in or counter to the casting direction (x).

5. Operating method according to Claim 1 or 2,
**characterized**

- **in that** a maximum of two of the variables, the period duration (T), the first time segment (T1), the second time segment (T2), the amplitude (v2) of the harmonic oscillation, the velocity offset (v1) and the constant velocity (v3), is preset for the control device (9) by an operator (13) or a higher-level system (14) and
- **in that** the control device (9) automatically determines the period duration (T), the first time segment (T1), the second time segment (T2), the amplitude (v2) of the harmonic oscillation, the velocity offset (v1) and the constant velocity (v3) by using the casting velocity (vG) and/or metallurgical properties of the liquid metal (1).

6. Computer program, which comprises machine code (12), which can be directly executed by a control device (9) of a continuous casting installation, the execution of the machine code (12) by the control device (9) having the effect that the control device (9) activates an oscillating device (8) of the continuous casting installation in such a way that the continuous casting mould (1) is moved periodically in the casting direction (x) and, in a first time segment (T1) of the period, the motion of the continuous casting mould (1) is a harmonic oscillation, on which a velocity offset (v1) is superposed, and, in a second time segment (T2) of the period, the motion occurs with constant velocity (v3).

**7.** Computer program according to Claim 6,
**characterized in that** the execution of the machine code (12) by the control device (9) has the effect that the harmonic oscillation has an amplitude (v2) and that the amplitude (v2) of the harmonic oscillation, the velocity offset (v1) and the constant velocity (v3) are coordinated with one another in such a way that the time progression of the velocity (v) at the transition from the first time segment (T1) to the second time segment (T2) and at the transition from the second time segment (T2) of one period to the first time segment (T1) of the subsequent period is continuously differentiable.

**8.** Computer program according to Claim 7,
**characterized**

- **in that** the execution of the machine code (12) by the control device (9) has the effect
- that the control device (9) accepts three variables from an operator (13) or a higher-level system (14) and
- that the control device (9) determines on the basis of the variables preset for it the period duration (T), the first time segment (T1), the second time segment (T2), the amplitude (v2) of the harmonic oscillation, the velocity offset (v1) and the constant velocity (v3).

**9.** Computer program according to Claim 8,
**characterized**

- **in that** a first of the three variables is one of the times, the period duration (T), the first time segment (T1) and the second time segment (T2), or a variable equivalent thereto,
- **in that** a second of the three variables is one of the velocities, the amplitude of the harmonic oscillation (v2), the velocity offset (v1) and the constant velocity (v3), or a variable equivalent thereto and
- **in that** a third of the three variables is another of the said times (T, T1, T2) or a relationship of two of the times (T, T1, T2) to one another or another of the said velocities (v1, v2, v3) or a relationship of two of the velocities (v1, v2, v3) to one another or a time interval (T3) or a time fraction ($\tau$) during which the velocity (v) of the oscillation of the continuous casting mould (1) is directed in or counter to the casting direction (x).

**10.** Computer program according to Claim 6 or 7,
**characterized**

- **in that** the execution of the machine code (12) by the control device (9) has the effect
- that the control device (9) accepts from an operator (13) or a higher-level system (14) a maximum of two of the variables, the period duration (T), the first time segment (T1), the second time segment (T2), the amplitude (v2) of the harmonic oscillation, the velocity offset (v1) and the constant velocity (v3), and
- that the control device (9) automatically determines the period duration (T), the first time segment (T1), the second time segment (T2), the amplitude (v2) of the harmonic oscillation, the velocity offset (v1) and the constant velocity (v3) by using the casting velocity (vG) and/or metallurgical properties of the liquid metal (2).

**11.** Computer program according to one of Claims 6 to 10,
**characterized**
**in that** it is stored in machine-readable form on a data carrier (11) .

**12.** Control device for a continuous casting installation,
**characterized**
**in that** the control device is programmed with a computer program (10) according to one of Claims 6 to 10.

**13.** Continuous casting installation,

- the continuous casting installation having a continuous casting mould (1), into which liquid metal (2) is poured,
- the liquid metal (2) solidifying on side walls (3) of the continuous casting mould (1) to form a strand shell (4),
- the continuous casting installation having a drawing-off device (6), by means of which the strand shell (4) is drawn out of the continuous casting mould (1) in a casting direction (x) at a casting velocity (vG), with or without a core (5) that is still liquid,
- the continuous casting installation having an oscillating device (8), by means of which the continuous casting mould (1) is moved periodically in the casting direction (x),
- the continuous casting installation having a control device (9), by which the oscillating device (8) is controlled,

**characterized**
**in that** the control device (9) is designed as a control device according to Claim 12.

## Revendications

1. Procédé d'exploitation d'une installation de coulée continue,

   - dans lequel un métal liquide (2) est coulé dans une lingotière de coulée continue (1) de l'installation de coulée continue,
   - dans lequel le métal liquide (2) se solidifie en une croûte solidifiée (4) sur les parois latérales (3) de la lingotière de coulée continue (1),
   - dans lequel la croûte solidifiée (4) est extraite de la lingotière de coulée continue (1) dans une direction de coulée (x) et à une vitesse de coulée (vG), avec ou sans le noyau (5) encore liquide, à l'aide d'un dispositif d'extraction (6) de l'installation de coulée continue,
   - dans lequel la lingotière de coulée continue (1) est déplacée périodiquement dans la direction de coulée (x) au moyen d'un dispositif d'oscillation (8) de l'installation de coulée continue commandé par un dispositif de commande (9) de l'installation de coulée continue,

   **caractérisé**
   **en ce que** le mouvement de la lingotière de coulée continue (1) est, dans un premier intervalle de temps (T1) de la période, une oscillation harmonique à laquelle un décalage de vitesse (v1) se superpose et, dans un second intervalle de temps (T2) de la période, le mouvement s'effectue à vitesse constante (v3).

2. Procédé d'exploitation selon la revendication 1,
   **caractérisé**
   **en ce que** l'oscillation harmonique a une amplitude (v2) et en ce que l'amplitude (v2) de l'oscillation harmonique, le décalage de vitesse (v1) et la vitesse constante (v3) sont ajustés l'un/l'une par rapport aux autres de sorte que la variation dans le temps de la vitesse (v) lors du passage du premier intervalle de temps (T1) au second intervalle de temps (T2) et lors du passage du second intervalle de temps (T2) d'une période au premier intervalle de temps (T1) de la période suivante puisse être différenciée en permanence.

3. Procédé d'exploitation selon la revendication 2, **caractérisé**

   - **en ce que** trois grandeurs sont attribuées par défaut au dispositif de commande (9) par un opérateur (13) ou un système prioritaire (14), et
   - **en ce que** le dispositif de commande (9) détermine, à l'aide des grandeurs qui lui sont attribuées par défaut, la durée de période (T), le premier intervalle de temps (T1), le second intervalle de temps (T2), l'amplitude (v2) de l'oscillation harmonique, le décalage de vitesse (v1) et la vitesse constante (v3).

4. Procédé d'exploitation selon la revendication 3, **caractérisé**

   - **en ce qu'**une première des trois grandeurs est l'un des temps que sont la durée de période (T), le premier intervalle de temps (T1) et le second intervalle de temps (T2), ou une grandeur équivalente à ces temps,
   - **en ce qu'**une deuxième des trois grandeurs est l'une des vitesses que sont l'amplitude de l'oscillation harmonique (v2), le décalage de vitesse (v1) et la vitesse constante (v3), ou une grandeur équivalente à ces vitesses, et
   - **en ce qu'**une troisième des trois grandeurs est un autre des dits temps (T, T1, T2) ou une relation de deux des temps (T, T1, T2) l'un par rapport à l'autre, ou une autre des dites vitesses (v1, v2, v3) ou une relation de deux des vitesses (v1, v2, v3) l'une par rapport à l'autre, ou un laps de temps (T3) ou un pourcentage de temps ($\tau$) pendant lequel la vitesse (v) de l'oscillation de la lingotière de coulée continue (1) est orientée dans la direction de coulée (x) ou dans la direction opposée.

**5.** Procédé d'exploitation selon la revendication 1 ou 2, **caractérisé**

- **en ce qu'**au maximum deux des grandeurs que sont la durée de période (T), le premier intervalle de temps (T1), le second intervalle de temps (T2), l'amplitude (v2) de l'oscillation harmonique, le décalage de vitesse (v1) et la vitesse constante (v3) sont attribuées par défaut au dispositif de commande (9) par un opérateur (13) ou un système prioritaire (14), et
- **en ce que** le dispositif de commande (9) détermine automatiquement la durée de période (T), le premier intervalle de temps (T1), le second intervalle de temps (T2), l'amplitude (v2) de l'oscillation harmonique, le décalage de vitesse (v1) et la vitesse constante (v3) à l'aide de la vitesse de coulée (vG) et/ou de propriétés métallurgiques du métal liquide (1).

**6.** Programme d'ordinateur qui comporte un code machine (12) qu'un dispositif de commande (9) d'une installation de coulée continue peut directement exécuter, dans lequel l'exécution du code machine (12) par le dispositif de commande (9) fait que le dispositif de commande (9) déclenche un dispositif d'oscillation (8) de l'installation de coulée continue de façon que la lingotière de coulée continue (1) soit déplacée périodiquement dans la direction de coulée (x) et que le mouvement de la lingotière de coulée continue (1) soit, dans un premier intervalle de temps (T1) de la période, une oscillation harmonique à laquelle un décalage de vitesse (v1) se superpose et que, dans un second intervalle de temps (T2) de la période, le mouvement s'effectue à vitesse constante (v3).

**7.** Programme d'ordinateur selon la revendication 6,
**caractérisé**
**en ce que** l'exécution du code machine (12) par le dispositif de commande (9) fait que l'oscillation harmonique a une amplitude (v2) et que l'amplitude (v2) de l'oscillation harmonique, le décalage de vitesse (v1) et la vitesse constante (v3) sont ajustés l'un/l'une par rapport aux autres de sorte que la variation dans le temps de la vitesse (v) lors du passage du premier intervalle de temps (T1) au second intervalle de temps (T2) et lors du passage du second intervalle de temps (T2) d'une période au premier intervalle de temps (T1) de la période suivante puisse être différenciée en permanence.

**8.** Programme d'ordinateur selon la revendication 7,
**caractérisé**
**en ce que** l'exécution du code machine (12) par le dispositif de commande (9) fait

- que trois grandeurs sont fournies au dispositif de commande (9) par un opérateur (13) ou un système prioritaire (14), et
- que le dispositif de commande (9) détermine, à l'aide des grandeurs qui lui sont attribuées par défaut, la durée de période (T), le premier intervalle de temps (T1), le second intervalle de temps (T2), l'amplitude (v2) de l'oscillation harmonique, le décalage de vitesse (v1) et la vitesse constante (v3).

**9.** Programme d'ordinateur selon la revendication 8,
**caractérisé**

- **en ce qu'**une première des trois grandeurs est l'un des temps que sont la durée de période (T), le premier intervalle de temps (T1) et le second intervalle de temps (T2), ou une grandeur équivalente à ces temps,
- **en ce qu'**une deuxième des trois grandeurs est l'une des vitesses que sont l'amplitude de l'oscillation harmonique (v2), le décalage de vitesse (v1) et la vitesse constante (v3), ou une grandeur équivalente à ces vitesses, et
- **en ce qu'**une troisième des trois grandeurs est un autre des dits temps (T, T1, T2) ou une relation de deux des temps (T, T1, T2) l'un par rapport à l'autre, ou une autre des dites vitesses (v1, v2, v3) ou une relation de deux des vitesses (v1, v2, v3) l'une par rapport à l'autre, ou un laps de temps (T3) ou un pourcentage de temps (1) pendant lequel la vitesse (v) de l'oscillation de la lingotière de coulée continue (1) est orientée dans la direction de coulée (x) ou dans la direction opposée.

**10.** Programme d'ordinateur selon la revendication 6 ou 7,
**caractérisé en ce que** l'exécution du code machine (12) par le dispositif de commande (9) fait

- qu'au maximum deux des grandeurs que sont la durée de période (T), le premier intervalle de temps (T1), le second intervalle de temps (T2), l'amplitude (v2) de l'oscillation harmonique, le décalage de vitesse (v1) et la vitesse constante (v3) sont fournies au dispositif de commande (9) par un opérateur (13) ou un système prioritaire (14), et

- que le dispositif de commande (9) détermine automatiquement la durée de période (T), le premier intervalle de temps (T1), le second intervalle de temps (T2), l'amplitude (v2) de l'oscillation harmonique, le décalage de vitesse (v1) et la vitesse constante (v3) à l'aide de la vitesse de coulée (vG) et/ou de propriétés métallurgiques du métal liquide (2).

11. Programme d'ordinateur selon l'une des revendications 6 à 10,
**caractérisé**
**en ce qu'**il est enregistré sur un support de données (11) sous une forme lisible par une machine.

12. Dispositif de commande pour une installation de coulée continue,
**caractérisé en ce que** le dispositif de commande est programmé avec un programme d'ordinateur (10) selon l'une des revendications 6 à 10.

13. Installation de coulée continue,

- dans laquelle l'installation de coulée continue comprend une lingotière de coulée continue (1) dans laquelle un métal liquide (2) est coulé,
- dans laquelle le métal liquide (2) se solidifie en une croûte solidifiée (4) sur les parois latérales (3) de la lingotière de coulée continue (1),
- dans laquelle l'installation de coulée continue comprend un dispositif d'extraction (6) au moyen duquel la croûte solidifiée (4) est extraite de la lingotière de coulée continue (1) dans une direction de coulée (x) et à une vitesse de coulée (vG), avec ou sans le noyau (5) encore liquide,
- dans laquelle l'installation de coulée continue comprend un dispositif d'oscillation (8) au moyen duquel la lingotière de coulée continue (1) est déplacée périodiquement dans la direction de coulée (x),
- dans laquelle l'installation de coulée continue comprend un dispositif de commande (9) qui commande le dispositif d'oscillation (8),

**caractérisé en ce que**
le dispositif de commande (9) est exécuté en tant que dispositif de commande selon la revendication 12.

FIG 1

FIG 2

$$\tau = \frac{1-T3}{T}$$

FIG 3

$$a = -\frac{2n\pi v2}{T1} \cdot \sin(2n\pi t/T + \varphi 0)$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KARL MOERWALD et al.** Theoretical Studies to Adjust Proper Mold Oscillation Parameters. *AISE 2000,* 2000